Europäisches Patentamt

European Patent Office

Office européen des brevets

(11) Numéro de publication : **0 300 896 B1**

(12) **FASCICULE DE BREVET EUROPEEN**

(45) Date de publication du fascicule du brevet :
**22.04.92 Bulletin 92/17**

(51) Int. Cl.$^5$ : **F02P 7/067, F02P 5/15**

(21) Numéro de dépôt : **88401872.2**

(22) Date de dépôt : **20.07.88**

(54) **Dispositif de déclenchement d'évènement en phase avec une position angulaire d'un organe rotatif et son application.**

(30) Priorité : **24.07.87 FR 8710539**

(43) Date de publication de la demande :
**25.01.89 Bulletin 89/04**

(45) Mention de la délivrance du brevet :
**22.04.92 Bulletin 92/17**

(84) Etats contractants désignés :
**DE GB IT SE**

(56) Documents cités :
**EP-A- 0 175 576**
**DE-A- 2 352 772**
**FR-A- 2 171 626**
**FR-A- 2 441 829**
**GB-A- 2 009 420**

(56) Documents cités :
**US-A- 3 767 902**
**US-A- 3 942 491**
**US-A- 3 946 709**
**US-A- 4 133 323**

(73) Titulaire : **Siemens Automotive S.A.**
**Avenue du Mirail, B.P. 1149**
**F-31036 Toulouse Cédex (FR)**

(72) Inventeur : **Grimaud, Jean-Michel**
**"Larra" Au Village**
**F-31330 Grenade (FR)**
Inventeur : **Nozeran, Jean-Marc**
**105, rue Roquemaurel Bâtiment B**
**F-31300 Toulouse (FR)**

(74) Mandataire : **Fuchs, Franz-Josef, Dr.-Ing. et al**
**Postfach 22 13 17**
**W-8000 München 22 (DE)**

EP 0 300 896 B1

Jouve, 18, rue Saint-Denis, 75001 PARIS

## Description

L'invention concerne un dispositif de déclenchement d'évènement en phase avec une position angulaire d'un organe animé d'un mouvement de rotation.

Un tel dispositif est utilisé, notamment, sur les moteurs à combustion interne à allumage électronique pour allumer en un point particulier du cycle moteur le mélange explosif comprimé à l'intérieur d'un cylindre, c'est-à-dire avec un angle d'avance déterminé par rapport au passage du piston par le point mort haut. A cet effet, il est connu de repérer la position angulaire du vilebrequin au moyen d'une cible solidaire en rotation du vilebrequin et pourvue à sa périphérie d'une série de repères défilant devant un capteur qui peut être de type magnétique, capacitif, optique ou autre.

Le document EP-A-00 13 846 décrit un dispositif dans lequel la cible comporte à sa périphérie une succession de dents et de creux régulièrement espacés et une ou plusieurs discontinuités constituant des repères absolus. Les discontinuités peuvent être constituées par des dents plus longues et/ou des dents manquantes. Le signal de sortie du capteur est, après mise en forme, appliqué à un circuit électronique spécifique qui délivre un certain nombre de signaux, à savoir :

– un signal dent rectangulaire qui est l'image de la succession des dents et des creux à la périphérie de la cible ;

– un signal d'interpolation qui est constitué par une série d'impulsions représentant la division en fractions angulaires égales de l'intervalle angulaire entre deux dents ;

– un signal de synchronisation constitué d'impulsions qui coïncident avec les discontinuités de la cible ou sont déphasées d'un angle prédéterminé par rapport à celles-ci, par exemple afin d'identifier le point mort haut des pistons.

Comme décrit dans les documents FR-A-2 474 597 et EP-A-00 51 529, ces signaux peuvent être exploités par un calculateur qui détermine l'angle d'avance à l'allumage en fonction des paramètres de fonctionnement du moteur et dont l'étage de sortie commande la mise en conduction de la bobine et sa décharge provoquant l'étincelle d'allumage. Pour obtenir le déclenchement de l'étincelle, un compteur est préchargé avec la valeur calculée de l'angle d'avance à l'allumage exprimée en nombre d'impulsions du signal d'interpolation. Ce préchargement, éventuellement complété par un nombre fixe si la capacité maximale du compteur est supérieure au nombre d'impulsions du signal d'interpolation entre deux signaux de synchronisation, est assuré par le calculateur d'allumage sous la commande du signal de synchronisation. Le compteur préchargé est alors incrémenté sur ses entrées de poids fort par le signal dent jusqu'à ce que toutes ses sorties de poids fort soient à l'état "1". Un jeu de portes logiques permet ensuite d'incrémenter les entrées de poids faible du compteur par le signal d'interpolation. Quand toutes les sorties de poids faible sont également à l'état "1", c'est-à-dire que le compteur déborde, l'allumage est déclenché.

Bien que donnant satisfaction dans l'application considérée, ce dispositif de déclenchement d'évènement par compteur à préchargement induit néanmoins certaines contraintes qui en limitent les possibilités.

C'est ainsi qu'un seul compteur à préchargement ne pourra assurer le déclenchement que d'un seul type d'évènements, par exemple l'allumage, et qu'il faudra prévoir autant de compteurs à préchargement qu'il y a d'évènements de natures différentes à déclencher.

D'autre part, le processus même de déclenchement d'évènement en phase avec une position angulaire du vilebrequin est tel que le calculateur doit précharger le compteur au moment où le signal de synchronisation apparaît. Cette synchronisation du préchargement avec le cycle moteur nuit à l'utilisation optimale du calculateur dont la vitesse de calcul est constante alors que la périodicité des signaux de synchronisation est fonction de la vitesse de rotation du moteur qui varie de quelques dizaines de tours par minute lors du démarrage à froid à plusieurs milliers de tours par minute au régime maximal. Si d'autres fonctions telles que la détection de cliquetis dans une fenêtre angulaire située près du point mort haut, la correction de cliquetis (éventuellement cylindre par cylindre), le calcul du temps d'injection et la commande des injecteurs, la régulation de ralenti, le pilotage d'une boîte de vitesses automatique, la commande du temps d'ouverture des soupapes, etc... doivent également être assurées (certaines de ces fonctions pouvant elles-mêmes nécessiter le déclenchement d'évènements en phase avec le moteur et aggraver ainsi le problème), il sera difficile de les faire cohabiter au sein d'un même calculateur. On sera alors amené, soit à répartir ces fonctions entre plusieurs calculateurs, soit à utiliser un calculateur plus rapide qui sera en réalité surdimensionné par rapport à ce qu'exigerait strictement le déroulement des calculs, abstraction faite des interruptions qu'impose le préchargement du ou des compteurs de déclenchement d'évènements. Dans les deux cas, le coût de l'électronique s'en trouve accru.

L'invention vise donc à fournir un dispositif de déclenchement d'évènements "phasés" qui permette de s'affranchir des contraintes rencontrées avec les dispositifs existants.

Un autre but de l'invention est de fournir un dispositif qui permette d'assurer aisément le déclenchement d'une succession d'évènements de natures différentes ou non, éventuellement très rapprochés dans le temps.

Un autre but encore de l'invention est de fournir un dispositif de déclenchement d'évènement phasé qui puisse être intégré à un microprocesseur programmé, sans affecter le déroulement des programmes mis en oeuvre dans celui-ci.

A cet effet, l'invention a pour objet un dispositif de déclenchement d'évènement en phase avec une position angulaire déterminée d'un organe animé d'un mouvement de rotation comprenant :

– des moyens de codage angulaire délivrant un signal d'entrée impulsionnel en phase avec des pas angulaires égaux audit organe,

– des moyens pour délivrer un signal de synchronisation en réponse au passage dudit organe par au moins une position angulaire de référence et

– des circuits électroniques d'exploitation desdits signaux assurant le déclenchement dudit évènement à ladite position déterminée par comptage des impulsions du signal d'entrée,

caractérisé en ce que lesdits circuits comprennent :

– un compteur angulaire incrémenté par le signal d'entrée et remis à zéro par le signal de synchronisation pour présenter en permanence sur ces sorties un état qui est l'image de la position angulaire instantanée dudit organe par rapport à la position de référence,

– au moins un circuit de mémorisation dans lequel est stocké un nombre représentatif de ladite position angulaire déterminée par rapport à la position de référence et

– au moins un comparateur qui compare en permanence l'état des sorties du compteur angulaire avec celui des sorties du circuit de mémorisation et qui délivre un signal de déclenchement d'évènement en réponse à la détection d'une coïncidence entre lesdits états.

Suivant une forme préférée de réalisation dans laquelle les circuits électroniques comprennent des circuits d'interpolation assurant la subdivision électronique desdits pas angulaires en N fractions angulaires égales, ledit compteur angulaire comporte :

– un premier circuit de comptage permanent desdites subdivisions qui est remis à zéro par les impulsions du signal d'entrée et dont les sorties constituent les sorties de poids faibles du compteur angulaire, et

– un second circuit de comptage qui est incrémenté en permanence par les impulsions du signal d'entrée et remis à zéro par le signal de synchronisation et dont les sorties constituent les sorties de poids forts du compteur angulaire.

Suivant une caractéristique, lesdits circuits d'interpolation comprennent :

– un premier compteur qui est incrémenté par un premier signal d'horloge et remis à zéro par les impulsions du signal d'entrée,

– un registre qui est chargé avec le contenu du premier compteur sous la commande des impulsions du signal d'entrée,

– un second compteur qui est incrémenté par un second signal d'horloge de fréquence N fois supérieure à celle du premier signal d'horloge et remis à zéro par les impulsions du signal d'entrée, et

– un diviseur assurant la division du contenu instantané du second compteur par celui du registre et qui constitue ledit premier circuit de comptage.

D'autres caractéristiques et avantages de l'invention ressortiront de la description qui va suivre de modes de réalisation donnés uniquement à titre d'exemple et illustrés par les dessins annexés sur lesquels :

– Les figures 1 et 1A sont des schémas blocs d'un dispositif de déclenchement d'évènement selon l'invention ;

– La figure 2 est un schéma bloc d'un circuit de commande d'injection piloté par le circuit de la figure 1 ;

– Les figures 3A et 3B sont des organigrammes illustrant la commande d'injecteurs par un microprocesseur suivant une variante de réalisation.

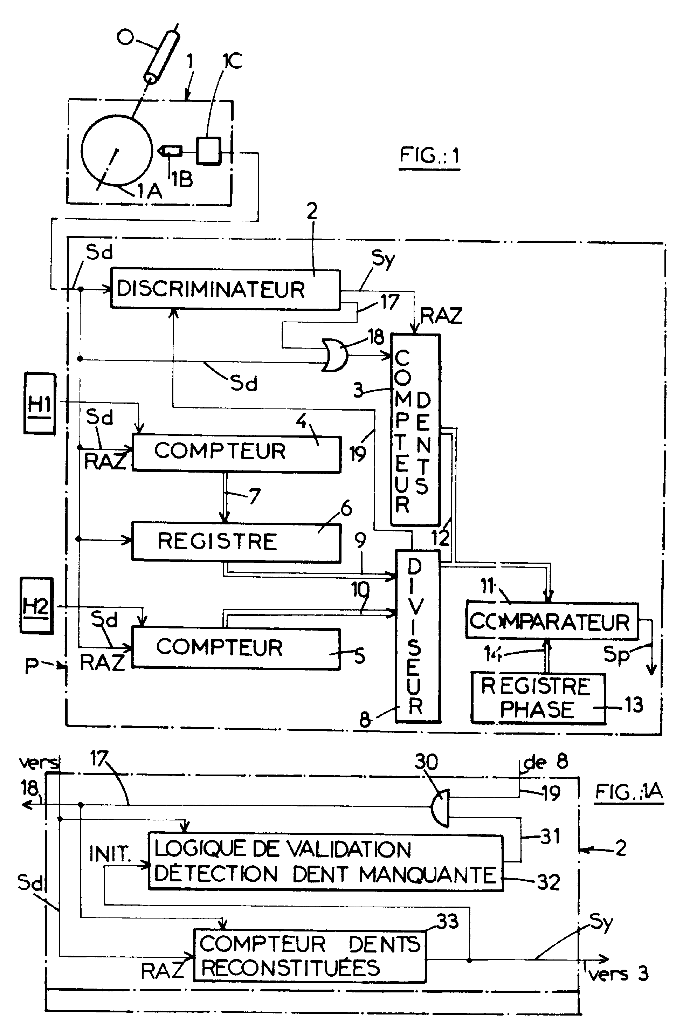

Le dispositif de la figure 1 est constitué d'un certain nombre de circuits logiques qui, soit peuvent se présenter sous forme d'un circuit câblé spécifique, soit font partie d'un microprocesseur programmé P. Le second mode préféré de réalisation présente l'avantage d'un moindre coût et d'une plus grande souplesse d'adaptation à des applications différentes.

Aux circuits de la figure 1 est associé un détecteur ou codeur de position angulaire 1 comprenant une cible 1A solidaire en rotation d'un organe 0 animé d'un mouvement de rotation, par exemple le vilebrequin d'un moteur à combustion interne. Cette cible est munie à sa périphérie de dents régulièrement espacées défilant devant un capteur 1B, par exemple à réluctance variable. Au moins une dent a été supprimée ou modifiée autrement à la périphérie de la cible 1B afin de former un repère absolu en un emplacement correspondant à une position angulaire de référence de l'organe 0. Le signal de sortie du capteur 1B est appliqué à un circuit de mise en forme 1C qui délivre un signal impulsionnel Sd en phase avec les pas angulaires que définissent les intervalles entre les fronts homologues de dents consécutives de la cible. Ces pas angulaires sont égaux, sauf à l'endroit où une ou plusieurs dents ont été supprimées. Un tel détecteur est bien connu et on pourra se reporter en particulier au document EP-A-00 13 846 pour de plus amples explications.

Le signal Sd est appliqué à un discriminateur 2 dont le rôle est, d'une part, d'identifier le repère absolu et d'émettre en réponse un signal de synchronisation Sy, d'autre part, de reconstituer électriquement la ou les dents manquantes sur sa sortie 17. Le discriminateur 2 peut présenter la configuration de la figure 1A ou revêtir une forme analogue à celle décrite dans le document EP-A-00 13 846 mais, dans le cas de circuits intégrés à un microprocesseur P, cette discrimination peut être aussi mise en oeuvre par logiciel : le microprocesseur P mesure, par comptage d'impulsions d'horloge, la durée de défilement devant le capteur 1B de l'intervalle séparant deux dents (entre fronts montants ou fronts descendants) et compare les durées mesurées sur au moins deux intervalles consécutifs. Différentes règles de comparaison peuvent être appliquées, notamment celle indiquée dans le document précité. Le signal de synchronisation émis Sy coïncide avec un front montant ou un front descendant du signal dent Sd, suivant le type de détection adopté, mais il peut être déphasé d'un certain nombre de dents par rapport à la position du repère absolu.

Le signal de synchronisation Sy délivré par le discriminateur 2 attaque l'entrée de remise à zéro (RAZ) d'un compteur de dents 3 qui reçoit, par l'intermédiaire d'une porte OU 18, le signal dent Sd et le signal dent reconstitué 17 à son entrée de comptage. Le compteur 3 ne nécessite pas de préchargement et s'incrémente librement ("free-running" suivant l'expression anglo-saxonne) après chaque remise à zéro.

Le signal dent Sd est également appliqué aux entrées de remise à zéro (RAZ) de deux compteurs 4 et 5. Le premier compteur 4 est incrémenté par un premier signal d'une horloge H1 de fréquence F et le second compteur 5 par un second signal d'une horloge H2 de fréquence N fois supérieure à celle du premier signal d'horloge, avec N = 2n.

Le compte présent sur les sorties du premier compteur 4 est appliqué à un registre 6 par un bus 7. L'entrée de mémorisation ou verrouillage du registre 6 est attaquée par le signal dent Sd.

Les sorties du registre 6 et du deuxième compteur 5 sont connectées aux entrées d'un diviseur 8 par des bus 9 et 10 respectivement.

Le compteur de dents 3 et le diviseur 8 forment ensemble un compteur angulaire et leurs sorties sont connectées à une première série d'entrées d'un comparateur 11 par un bus 12. Le diviseur 8 présente une sortie de poids fort 19 connectée au discriminateur 2. Enfin, les sorties d'un registre de phase 13 sont connectées à une deuxième série d'entrées du comparateur 11 par un bus 14. La sortie du comparateur 11 délivre un signal de déclenchement d'évènement Sp quand les nombres appliqués à ses deux séries d'entrée sont égaux.

On a représenté à la figure 1A une forme de réalisation du discriminateur 2. Il comprend une porte ET 30 dont une entrée est connectée à la sortie 19 du diviseur 8 et dont la sortie 17 est connectée à l'une des entrées de la porte OU 18. L'autre entrée de la porte ET 30 est attaquée par la sortie 31 d'un circuit logique 32 de validation de détection de la dent manquante. Ce circuit logique 32 compte les impulsions du signal dent Sd appliqué à son entrée de comptage et il est initialisé par le signal de synchronisation Sy délivré par la sortie d'un compteur 33 qui compte les dents reconstituées électroniquement à la sortie 17 de la porte ET 30. Le compteur 33 est remis à zéro par les impulsions du signal dent Sd.

En fonctionnement, le registre de phase 13 est chargé avec un nombre de fractions angulaires 1/2n représentant la position angulaire de déclenchement d'un évènement par rapport au signal de synchronisation Sy. Cette position angulaire peut être fixe ou variable d'un cycle de déclenchement à l'autre. Dans le premier cas, le chargement du registre 13 a lieu une fois pour toutes. Dans le second, le chargement est effectué par un calculateur (qui peut être le microprocesseur P dont fait partie le circuit de déclenchement) à n'importe quel instant antérieur au déclenchement de l'évènement : dans les deux cas, il n'y a pas lieu de prévoir de préchargement d'un compteur en synchronisme avec la rotation de la cible 1A.

A chaque apparition du signal de synchronisation Sy coïncidant avec un signal dent Sd, le registre 6 mémorise le compte présent sur les sorties du compteur 4 et les compteurs 3, 4 et 5 sont remis à zéro.

Le compteur 4 commence alors à compter les impulsions du signal de l'horloge H1 de fréquence F, et le compteur 5 celles du signal de l'horloge H2 de fréquence NF. Au fur et à mesure que le compteur 5 s'incrémente à la fréquence NF, son contenu instantané est divisé dans le diviseur 8 par celui du registre 6 représentant le nombre d'impulsions à la fréquence F comptées sur l'intervalle ou pas angulaire précédent ; par conséquent, la sortie du diviseur 8 s'incrémente d'une unité à chaque fois que la cible a tourné d'un angle représentant une fraction 1/N du pas angulaire séparant deux dents.

Au moment où la dent suivante est détectée, le registre 6 est chargé avec le compte présent en sortie du compteur 4, le contenu des compteurs 4 et 5 est ramené à zéro, la sortie du diviseur 8 passe à zéro et le compteur de dents 3 est incrémenté d'une unité.

Le processus précédent se reproduit à la détection de chaque dent de sorte que l'état des sorties du compteur angulaire (dont les sorties de poids faibles et poids forts sont constituées respectivement par les sorties du diviseur 8 et du compteur de dents 3), représente à tout instant la position angulaire instantanée de la cible par rapport à la position de référence définie par le repère absolu, exprimée en nombre de fractions 1/2n de l'intervalle ou pas angulaire séparant deux dents. Par exemple si l'on choisit n = 3, conduisant à une division de chaque intervalle en 8 fractions égales, et une cible ayant 45 dents dont une a été supprimée, on obtiendra une résolution de 1°.

Lorsque le compte présent sur les sorties du compteur angulaire 3, 8 atteint celui contenu dans le registre 13, le comparateur 11 produit le signal Sp qui est bien en phase avec la position angulaire préalablement chargée dans le registre 13.

Par ailleurs, à chaque impulsion du signal dent Sd le circuit logique 32 de comptage est incrémenté. Lorsque son contenu atteint le nombre total de dents de la cible 1A qui doivent défiler devant le capteur 1B entre deux signaux de synchronisation consécutifs, il y a débordement et la sortie 31 passe de l'état bas ("0") à l'état haut ("1"). Ceci permet d'assurer que la détection de la dent manquante (ou similaire) a bien lieu au moment où celle-ci défile devant le capteur 18 et d'éviter toute détection intempestive en une position angulaire différente de la cible 1A.

Lors de ce défilement de la dent manquante le compteur 5 n'est pas remis à zéro et le diviseur 8 s'incrémente au-delà de N unités : lorsqu'un compte N+P est atteint, la sortie 19 du diviseur 8 passe à l'état haut, de même que la sortie 17 de la porte ET 30. La sortie 31 est ensuite ramenée à l'état bas par tout moyen approprié, avant l'apparition de l'impulsion suivante du signal dent Sd : il peut s'agir par exemple d'une temporisation appropriée du circuit 31 ou bien (variante qui n'a pas été représentée) une bascule RS intercalée entre le circuit 32 et la porte ET peut être remise à zéro par un circuit de temporisation déclenché par la sortie de la porte ET 30.

Il y a donc reconstitution électronique de la dent manquante et celle-ci est utilisée pour incrémenter le compteur de dents 3.

Cette dent reconstituée incrémente également le compteur 33 qui émet le signal de synchronisation Sy lorsqu'il y a débordement après comptage d'un nombre prédéterminé de dents reconstituées. On peut donc ainsi déclencher le signal de synchronisation Sy avec une périodicité angulaire voulue, par exemple à chaque dent manquante, toutes les deux, trois, ..... k dents manquantes en jouant sur les caractéristiques du compteur 33. A chaque déclenchement du signal de synchronisation Sy, le circuit logique 32 de validation de détection de la dent manquante est réinitialisé et le processus précédent est répété.

On notera enfin pour mémoire que, dans l'exemple décrit, la position angulaire définie par l'état des sorties du compteur angulaire 3, 8 pendant le premier intervalle angulaire qui suit la dent manquante est faussé car le compteur 4 s'est incrémenté, pendant le défilement de la dent manquante, d'un nombre d'impulsions d'horloge à la fréquence F qui, à vitesse constante de la cible, est le double de celui qui est compté sur les autres intervalles. C'est en effet par ce nombre double, chargé ensuite dans le registre 6, qu'est divisé le contenu du compteur 5.

Cette erreur n'est pas gênante s'il n'y a aucun évènement à déclencher sur le premier intervalle angulaire, car elle se trouvera éliminée dès le deuxième intervalle angulaire. Si nécessaire, il peut toutefois y être remédié en interdisant la mémorisation de la valeur du compteur 4 dans le registre 6 lorsque la dent manquante a été détectée. En variante, on peut également commander la remise à zéro du compteur 4 et du registre 6, non par le signal dent Sd, mais par la sortie de la porte OU 18.

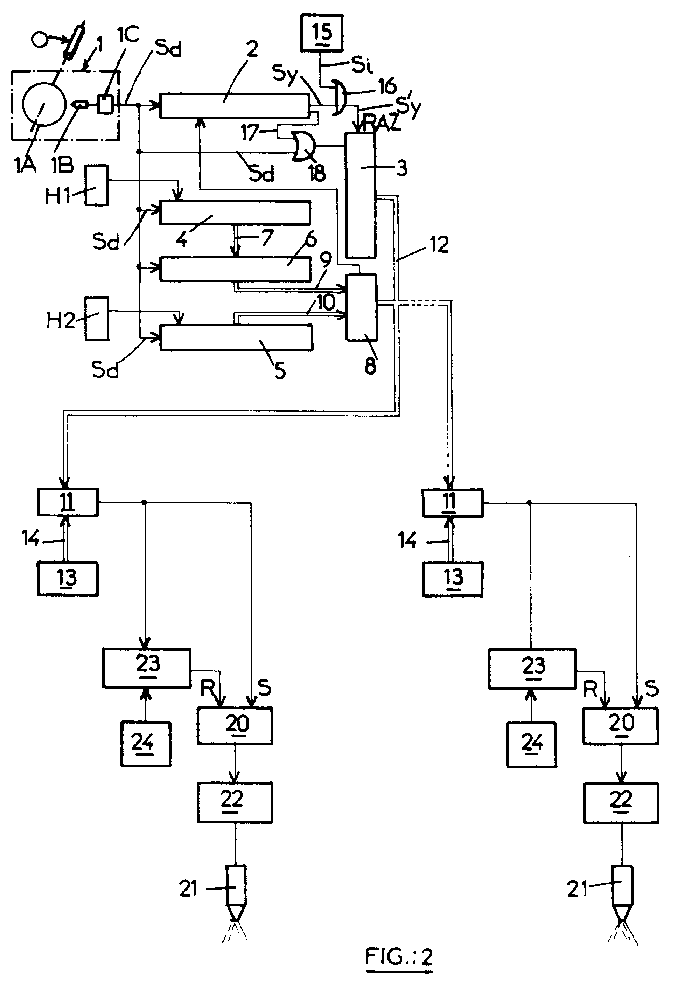

Le dispositif décrit ci-dessus trouve une application particulièrement intéressante dans le cadre de la commande de l'ouverture des injecteurs d'un moteur à combustion interne en phase avec la distribution du moteur. Dans cette application, le dispositif peut être adapté pour que le compteur de dents 3 effectue un comptage sur deux tours moteurs (cycle complet d'un moteur à quatre temps), soit 720°. Pour ce faire, le moteur devra être équipé d'un moyen, tel qu'un capteur 15 (figure 2) détectant un repère sur un arbre à cames, délivrant un signal Si d'identification d'un cylindre particulier. L'arbre à cames tournant deux fois moins vite que le vilebrequin, ce signal sera émis tous les deux tours moteurs. En combinant ce signal d'identification Si avec le signal de synchronisation Sy issu du discriminateur 2 dans une porte ET 16 (figure 2), la remise à zéro du compteur de dents 3 n'aura lieu que tous les deux tours sous la commande du nouveau signal de synchronisation S'y.

Pour déclencher l'ouverture d'un injecteur avec un certain déphasage angulaire par rapport au point mort haut du piston correspondant, il suffit de charger dans le registre de phase 13 la valeur que présente ce déphasage par rapport au signal de synchronisation S'y. Ce chargement n'a pas besoin d'être effectué à un moment précis du cycle moteur, il suffit qu'il le soit avant que l'évènement vienne à se produire.

Lorsqu'il y a égalité entre le contenu du compteur angulaire (compteur de dents 3 + diviseur 8) et du registre de phase 13, le comparateur 11 délivre le signal Sp de commande d'ouverture d'injecteur.

Dans l'exemple représenté à la figure 2, ce signal attaque l'entrée "SET" d'une bascule RS 20 dont la sortie commande l'ouverture de l'injecteur 21 par l'intermédiaire d'un circuit de puissance 22. L'injecteur 21 reste ouvert pendant un temps déterminé par un compteur 23 préalablement préchargé par le calculateur d'injection. Le compteur 23 est incrémenté par un signal d'horloge 24 après initialisation par le signal de sortie Sp du comparateur 11 et, lorsqu'il arrive à débordement, il émet sur l'entrée "RESET" de la bascule 20 un signal qui ramène la sortie de celle-ci à son état initial. L'injecteur 21 est alors refermé.

Dans cette configuration, il est nécessaire de prévoir un registre de phase 13, un comparateur 11 et un circuit de commande 20-24 par injecteur. Néanmoins un seul compteur angulaire 3, 8 est connecté en parallèle par le bus 12 aux différents registres de phase 13 et comparateurs 11 comme représenté à la figure 2.

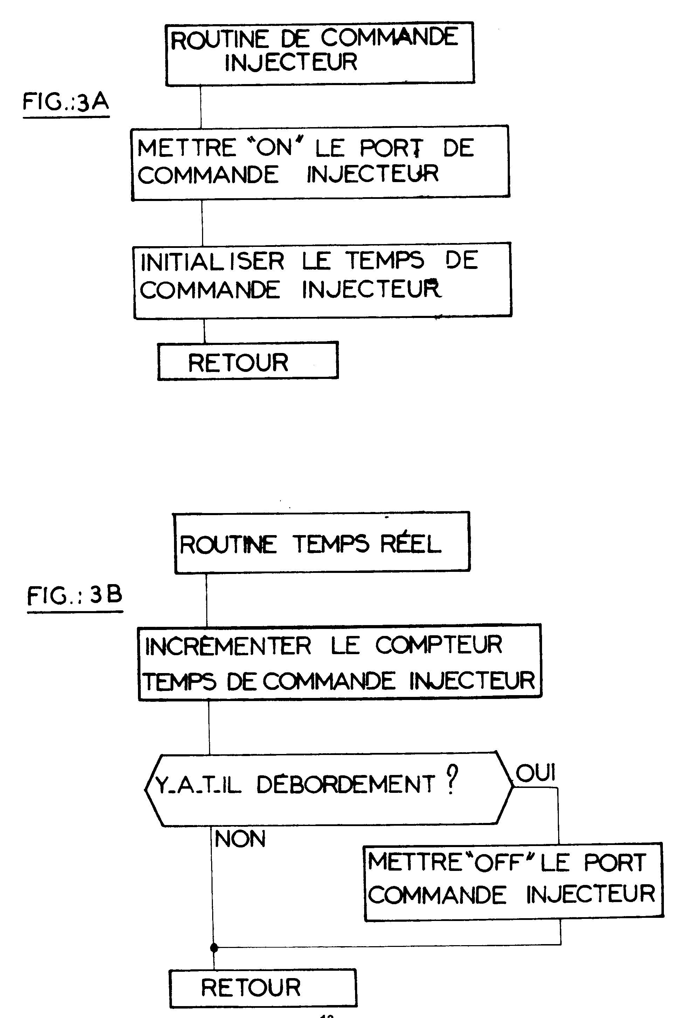

Selon une variante de réalisation, les circuits de puissance 22 des injecteurs sont connectés directement à des "ports" du microprocesseur P. Une telle configuration est classique et n'a pas été représentée. Le signal Sp déclenche le déroulement d'un sous-programme de commande d'ouverture de l'injecteur (Fig. 3A), qui assure également l'initialisation d'un compteur déterminant le temps d'ouverture préalablement calculé de l'injecteur. Un second sous-programme (Fig. 3B) assure l'incrémentation du compteur de temps d'ouverture de l'injecteur. Lorsqu'il y a détection du débordement de ce compteur, l'injecteur est refermé.

Dans cette variante, un seul registre de phase 13 et un seul comparateur 11 suffisent, le microprocesseur assurant l'aiguillage de l'ordre d'ouverture vers la voie de commande de l'injecteur concerné.

Dans cette application à la commande d'injecteurs, le dispositif permet de déclencher individuellement le début de l'injection de carburant au niveau de chaque cylindre à une position (fixe ou variable) donnée par rapport au cycle de fonctionnement du moteur, (par exemple pendant la phase d'admission de chaque cylindre), et d'optimiser ainsi le fonctionnement du moteur lorsque celui-ci est alimenté par un système d'injection de type séquentiel phasé.

En outre, conjointement avec la commande des injecteurs, le même dispositif peut être utilisé pour le déclenchement d'autres évènements, par exemple l'ouverture et la fermeture d'une "fenêtre angulaire" de détection de cliquetis, la mise en conduction de la bobine et l'allumage du mélange comprimé dans un cylindre. A cet effet, il suffira de prévoir le nombre voulu de comparateurs associés chacun à un registre de phase chargé avec une position angulaire déterminée par le calculateur de pilotage du moteur. L'exploitation des signaux de sortie des comparateurs peut être faite, soit au moyen de bascules comme décrit à la figure 2, soit par logiciel. Dans ce dernier cas, et si la phase des évènements à déclencher le permet, un même comparateur et son registre de phase associé pourra éventuellement servir à déclencher des évènements de natures différentes.

Par ailleurs, que le compteur angulaire 3, 8 soit exploité pour la seule commande de l'ouverture des injecteurs ou pour le déclenchement d'autres évènements, sa remise à zéro n'intervient pas nécessairement tous les deux tours du moteur : elle peut avoir lieu autant de fois par tour qu'il y a de passages de pistons par le point mort haut dans celui-ci, par exemple deux fois par tour dans le cas d'un moteur à quatre cylindres, en dotant la cible 1A d'un nombre correspondant de repères absolus convenablement placés. Comme connu en soi, le repérage des cylindres est alors effectué directement par le calculateur de pilotage du moteur, par incrémentation d'un compteur de cylindres, à chaque détection d'un repère absolu de la cible 1A. Ce compteur est périodiquement réinitialisé en réponse à la détection du signal d'identification de cylindre Si.

Le dispositif suivant l'invention offre ainsi sous différentes configurations de nombreuses possibilités d'application qu'il n'y a pas lieu de décrire de manière exhaustive dans le présent mémoire.

On retiendra que le compteur angulaire 3, 8 peut être unique quel que soit le nombre de signaux ou d'évènements à déclencher. Ce compteur fonctionne librement ("free-running") et à ce titre il ne nécessite qu'une remise à zéro périodique sur détection du signal de synchronisation Sy, S'y. Le ou les registres 13 contenant l'information relative à la position angulaire (phase) de déclenchement de l'évènement peuvent être chargés à n'importe quel moment du cycle. Ils ne sont pas nécessairement réactualisés à chaque cycle alors que le préchargement d'un compteur doit l'être systématiquement.

Le dispositif décrit permet une utilisation optimale du calculateur auquel il est associé ou dont il fait partie car les programmes mis en oeuvre ne sont pas interrompus pour le déclenchement d'un évènement : quand une valeur est calculée, elle est chargée dans le registre 13 approprié, et le calculateur peut poursuivre l'exécution du logiciel.

Enfin, le dispositif décrit peut être réalisé, soit sous forme de circuit spécifique, soit faire partie d'un microprocesseur : en effet, certains microprocesseurs (par exemple le microprocesseur Motorola 68HC11) disposent de compteurs et registres organisés de façon analogue pour comptabiliser des temps de manière à établir une sortie pilotée automatiquement par la comparaison des contenus d'un registre et d'un compteur (fonction "output compare" suivant la terminologie anglo-saxonne). L'invention en fait une application inattendue (le comptage angulaire) qui cohabite avec un pilotage classique du microprocesseur par signaux d'horloge à fréquence fixe.

Il va de soi que les modes de réalisation décrits ne sont que des exemples et l'on pourrait les modifier, notamment par substitution d'équivalents techniques, sans sortir pour cela du cadre de l'invention, comme définie dans les revendications.

## Revendications

1. Dispositif de déclenchement d'évènement en phase avec une position angulaire déterminée d'un organe animé d'un mouvement de rotation comprenant :

    – des moyens de codage angulaire (1) délivrant un signal d'entrée impulsionnel (Sd) en phase avec des pas angulaires égaux dudit organe,

    – des moyens (1, 2, 15, 16) pour délivrer un signal de synchronisation (Sy, S'y) en réponse au passage dudit organe par au moins une position angulaire de référence, et

    – des circuits électroniques d'exploitation desdits signaux assurant le déclenchement dudit évènement à ladite position déterminée par comptage des impulsions du signal d'entrée,
caractérisé en ce que lesdits circuits comprennent :

– un compteur angulaire (3, 8) incrémenté par le signal d'entrée (Sd) et remis à zéro par le signal de synchronisation (Sy, S'y) pour présenter en permanence sur ses sorties un état qui est l'image de la position angulaire instantanée dudit organe (0) par rapport à la position de référence,
– au moins un circuit de mémorisation (13) dans lequel est stocké un nombre représentatif de ladite position angulaire déterminée par rapport à la position de référence, et
– au moins un comparateur (11) qui compare en permanence l'état des sorties du compteur angulaire (3, 8) avec celui des sorties du circuit de mémorisation (13) et qui délivre un signal de déclenchement d'évènement (Sp) en réponse à la détection d'une coïncidence entre lesdits états.

2. Dispositif selon la revendication 1, dans lequel les circuits électroniques comprennent des circuits d'interpolation assurant la subdivision électronique desdits pas angulaires en N fractions angulaires égales, caractérisé en ce que ledit compteur angulaire comporte :
– un premier circuit (8) de comptage permanent desdites subdivisions qui est remis à zéro par les impulsions du signal d'entrée (Sd) et dont les sorties constituent les sorties de poids faibles du compteur angulaire, et
– un second circuit de comptage (3) qui est incrémenté en permanence par les impulsions du signal d'entrée (Sd) et remis à zéro par le signal de synchronisation (Sy, S'y) et dont les sorties constituent les sorties de poids forts du compteur angulaire.

3. Dispositif selon la revendication 2, caractérisé en ce que lesdits circuits d'interpolation comprennent :
– un premier compteur 4 qui est incrémenté par un premier signal d'horloge (F) et remis à zéro par les impulsions du signal d'entrée (Sd),
– un registre (6) qui est chargé avec le contenu du premier compteur (4) sous la commande des impulsions du signal d'entrée (Sd),
– un second compteur (5) qui est incrémenté par un second signal d'horloge (NF) de fréquence N fois supérieure à celle du premier signal d'horloge et remis à zéro par les impulsions du signal d'entrée (Sd), et
– un diviseur (8) assurant la division du contenu instantané du second compteur (5) par celui du registre (6) et qui constitue ledit premier circuit de comptage.

4. Dispositif selon l'une quelconque des revendications 2 et 3, caractérisé en ce que le second circuit de comptage (3) est un compteur du type qui s'incrémente librement.

5. Dispositif selon l'une quelconque des revendications 1 à 4, caractérisé en ce que les moyens de codage angulaire (1) comprennent une cible (1A) pourvue à sa périphérie d'une succession de dents et de creux régulièrement répartis défilant devant un capteur (1B) et en ce que les moyens de synchronisation comprennent au moins une discontinuité dans ladite succession de dents et de creux et un circuit électronique de discrimination (2) adapté pour détecter ladite discontinuité et délivrer en réponse ledit signal de synchronisation (Sy).

6. Dispositif selon la revendication 5 lorsqu'elle dépend de la revendication 3, caractérisé en ce que le circuit électronique de discrimination (2) comprend des circuits (30, 32) générateurs d'impulsions en réponse à la détection d'un débordement du premier circuit de comptage (8) et un troisième compteur (33) qui génère ledit signal de synchronisation (Sy) en réponse au comptage d'un nombre prédéterminé desdites impulsions.

7. Dispositif selon l'une quelconque des revendications 1 à 6, caractérisé en ce que, pour le déclenchement d'évènements en différentes positions angulaires déterminées de la rotation dudit organe, il comporte plusieurs comparateurs (11) connectés chacun, d'une part aux sorties du compteur angulaire (3, 8), d'autre part à un circuit de mémorisation respectif (13) dans lequel est stockée l'une desdites positions angulaires déterminées.

8. Dispositif selon l'une quelconque des revendications 1 à 7, caractérisé en ce que ledit circuit de mémorisation est un registre.

9. Dispositif selon l'une quelconque des revendications 1 à 8, caractérisé en ce que les circuits électroniques (2-14) dudit dispositif font partie intégrante d'un microprocesseur.

10. Application du dispositif selon l'une quelconque des revendications 1 à 9 à la commande de l'ouverture séquentielle d'injecteurs en phase avec les cycles de fonctionnement d'un moteur à combustion interne piloté par un calculateur électronique, caractérisé en ce que la position angulaire d'ouverture d'un injecteur (21) est chargée dans le circuit de mémorisation (13) par le calculateur électronique (P) et l'ouverture dudit injecteur est commandée par ledit comparateur (11).

11. Application selon la revendication 10, caractérisée en ce qu'à chaque injecteur (21) sont associés un circuit de mémorisation (13) et un comparateur (11).

12. Application selon la revendication 10, caractérisée en ce qu'aux injecteurs (21) sont associés un seul circuit de mémorisation (13) et un seul comparateur (11) dont le signal de déclenchement (Sp) est aiguillé vers chaque injecteur (21) par le calculateur électronique.

**Patentansprüche**

1. Einrichtung zum Auslösen eines in Phase mit der Winkellage eines drehbaren Bauteils liegenden Ereignisses, mit

– einer Winkelkodiereinrichtung (1), die ein Impulseingangssignal (Sd) liefert, das in Phase mit jeweils gleichen Winkelschritten des Bauteils liegt,

– Mitteln (1, 2, 15, 16) zum Liefern eines Synchronisationssignals (Sy, S'y), das dem Durchgang des Bauteils durch mindestens eine Bezugswinkellage entspricht und

– einer elektronischen Schaltung zum Auswerten der Signale für die Auslösung des Ereignisses in einer Position, die durch Zählen der Impulse des Eingangssignales bestimmt ist,

dadurch gekennzeichnet, daß die Schaltung aufweist:

– einen Winkelzähler (3, 8) zum inkrementellen Zählen des Eingangssignales (Sd) und zum Rückstellen auf Null durch das Sychronisationssignal (Sy, S'y), um an dessen Ausgängen laufend einen Zustand zu liefern, der ein Abbild der jeweiligen Winkellage des Bauteils (0) in Bezug auf die Bezugsposition ist,

– mindestens eine Speicherschaltung (13) zum Speichern einer Zahl, die die Winkelstellung repräsentiert, die von der Bezugsposition bestimmt ist und

– mindestens eine Vergleichsstufe (11) zum Vergleichen des laufenden Ausgangszustandes des Winkelzählers (3, 8) mit den Ausgängen der Speicherschaltung (13) und zum Erzeugen eines Signals zum Auslösen des Ereignisses (Sp) wenn festgestellt wird, daß zwischen den beiden Zuständen Übereinstimung besteht.

2. Einrichtung nach Anspruch 1, wobei die elektronische Schaltung eine Interpolationsschaltung zur elektronischen Unterteilung der Winkelschritte in N Bruchteile gleicher Winkel aufweist, dadurch gekennzeichnet, daß der Winkelzähler aufweist:

– eine erste Schaltung (8) zum laufenden Zählen der Unterteilungen, die von dem Eingangsimpulssignal (Sd) auf Null gestellt wird und deren Ausgänge gering gewichtete Ausgänge für die Winkelzählung darstellen und

– einen zweiten Zähler (3), der laufend von den Impulsen des Eingangssignals (Sd) imkrementell gezählt und von dem Synchronisationssignal (Sy, S'y) auf Null gestellt wird, und dessen Ausgänge stark bewertete Ausgänge für die Winkel-zählung darstellen.

3. Vorrichtung nach Anspruch 2, dadurch gekennzeichnet, daß die Interpolationsschaltung aufweist:

– einen ersten Zähler (4), der von einem ersten Taktsignal (F) inkrementell hochgezählt wird und von dem Impulseingangssignal (Sd) auf Null gestellt wird,

– einen Speicher (6), der mit dem Inhalt des ersten Zählers (4) gemäß dem Befehl des Impulseingangssignals (Sd) geladen wird,

– einen zweiten Zähler (5), der von einem zweiten Taktsignal (NF) inkrementell hochgezählt wird, dessen Frequenz N-fach über der Frequenz des ersten Taktsignals liegt und der von dem Impulseingangssignal (Sd) auf Null gestellt wird und

– eine Dividierschaltung (8) zum Dividieren des jeweiligen Inhalts des zweiten Zählers (5) durch den Inhalt des Speichers (6), wobei die Dividierschaltung die erste Zählschaltung bildet.

4. Einrichtung nach einem der Ansprüche 2 und 3, dadurch gekennzeichnet, daß die zweite Zählschaltung (3) ein beliebig inkrementierender Zähler ist.

5. Einrichtung nach einem der Ansprüch 1 bis 4, dadurch gekennzeichnet, daß die Winkelkodiereinrichtung (1) eine Zielscheibe (1A) aufweist, die an ihrem Umfang mit einer Reihe von gleichmäßig verteilten Zähnen und Lücken versehen ist und vor einem Empfänger (1B) rotiert und daß die Synchronisationseinrichtung mindestens eine Unregelmäßigkeit in der Folge der Zähne und Lücken sowie eine elektronische Diskriminierungsschaltung (2) aufweist, die in der Lage ist, die Unregelmäßigkeit festzustellen und dementsprechend das Synchronisationssignal (Sy) zu liefern.

6. Einrichtung nach Anspruch 5 soweit abhängig von Anspruch 3, dadurch gekennzeichnet, daß die elektronische Diskriminierungsschaltung (2) Schaltungen (30, 32) zum Erzeugen von Impulsen abhängig davon aufweist, daß ein Überlauf der ersten Zählschaltung (8) festgestellt wird und einen dritten Zähler (33), der das Synchronisationssignal (Sy) abhängig von der Zählung einer vorbestimmten Impulszahl erzeugt.

7. Einrichtung nach einem der Ansprüch 1 bis 6, dadurch gekennzeichnet, daß zum Auslösen von Ereignissen bei unterschiedlichen Winkelpositionen entsprechend der Rotation des Bauteils mehrere Vergleichsschaltungen (11) vorgesehen sind, die jeweils einerseits an die Ausgänge des Winkelzählers (3, 8) und andererseits an jeweils eine Speicherschaltung (13) angeschlossen sind, in der eine der vorbestimmten Winkelpositionen gespeichert wird.

8. Einrichtung nach einem der Ansprüch 1 bis 7, dadurch gekennzeichnet, daß die Speicherschaltung ein Register ist.

9. Einrichtung nach einem der Ansprüch 1 bis 8, dadurch gekennzeichnet, daß die elektronischen Schaltungen (2 bis 14) der Einrichtung Bestandteil eines Mikroprozessors sind.

10. Anwendung der Einrichtung nach einem der Ansprüche 1 bis 9 auf den Befehl zum aufeinanderfolgenden Aktivieren von Injektoren in Phase mit den Funktionszyklen einer von einem elektronischen Rechner gesteuerten Brennkraftmaschine, dadurch gekennzeichnet, daß die Winkellage der Aktivierung eines Injektors (21) in der Speicherschaltung (13) durch den elektronischen Rechner (P) gespeichert ist und die Aktivierung des Injektors von der Vergleichsschaltung (11) ausgelöst wird.

11. Anwendung nach Anspruch 10, dadurch gekennzeichnet, daß jeweils eine Speicherschaltung (13) und eine Vergleichsschaltung (11) für einen Injektor (21) vorgesehen sind.

12. Anwendung nach Anspruch 10, dadurch gekennzeichnet, daß eine einzige Speicherschaltung (13) und eine einzige Vergleichsschaltung (11) für die Injektoren (21) vorgesehen sind, wobei das Auslösesignal (Sp) für jeden Injektor (21) durch den elektronischen Rechner ausgewählt wird.

**Claims**

1. Device for triggering an event in phase with a determined angular position of a component driven to execute a rotational movement, comprising:
   – angular encoding means (1) delivering a pulsed input signal (Sd) in phase with equal angular steps of said component,
   – means (1, 2, 15, 16) for delivering a synchronising signal (Sy, S'y) in response to the passage of said component through at least one angular reference position, and
   – electronic circuits for utilising said signals ensuring the triggering of said event at said position determined by counting the pulses of the input signal,
   characterised in that said circuits comprise:
   – an angular counter (3, 8) incremented by the input signal (Sd) and reset to zero by the synchronising signal (Sy, S'y) to exhibit permanently on its outputs a condition which is the image of the instantaneous angular position of said component (0) in relation to the reference position,
   – at least one memory circuit (13) in which there is stored a number representing said angular position determined in relation to the reference position, and
   – at least one comparator (11) which permanently compares the condition of the outputs of the angular counter (3, 8) with that of the outputs of the memory circuit (13) and which delivers a signal for triggering an event (Sp) in response to the detection of a coincidence between said conditions.

2. Device according to Claim 1, in which the electronic circuits comprise interpolation circuits ensuring the electronic subdivision of said angular steps into N equal angular fractions, characterised in that said angular counter comprises:

   – a first circuit (8) for the permanent counting of said subdivisions, which is reset to zero by the pulses of the input signal (Sd) and the outputs of which form the least significant outputs of the angular counter, and
   – a second counting circuit (3) which is permanently incremented by the pulses of the input signal (Sd) and reset to zero by the synchronising signal (Sy, S'y) and the outputs of which form the most significant outputs of the angular counter.

3. Device according to Claim 2, characterised in that said interpolation circuits comprise:
   – a first counter 4 which is incremented by a first clock signal (F) and reset to zero by the pulses of the input signal (Sd),
   – a register (6) which is loaded with the content of the first counter (4) under the control of the pulses of the input signal (Sd),
   – a second counter (5) which is incremented by a second clock signal (NF) of frequency N times greater than that of the first clock signal and reset to zero by the pulses of the input signal (Sd), and
   – a divider (8) ensuring the division of the instantaneous content of the second counter (5) by that of the register (6) and which forms said first counting circuit.

4. Device according to either of Claims 2 and 3, characterised in that the second counting circuit (3) is a counter of the type which is incremented freely.

5. Device according to any one of Claims 1 to 4, characterised in that the angular encoding means (1) comprise a target (1A) provided, at its periphery, with a succession of teeth and of recesses which are regularly distributed, passing in front of a sensor (1B) and in that the synchronising means comprise at least one discontinuity in said succession of teeth and of recesses and an electronic discrimination circuit (2) adapted to detect said discontinuity and to deliver, in response, said synchronising signal (Sy).

6. Device according to Claim 5, when it is appendant to Claim 3, characterised in that the electronic discrimination circuit (2) comprises circuits (30, 32) generating pulses in response to the detection of an overflow of the first counting circuit (8) and a third counter (33) which generates said synchronising signal (Sy) in response to the counting of a predetermined number of said pulses.

7. Device according to any one of Claims 1 to 6, characterised in that, for the triggering of events in differing determined angular positions of the rotation of said component, it comprises a plurality of comparators (11) each connected, on the one hand, to the outputs of the angular counter (3, 8) and, on the other hand, to a respective memory circuit (13) in which one of said determined angular positions is stored.

8. Device according to any one of Claims 1 to 7, characterised in that said memory is a register.

9. Device according to any one of Claims 1 to 8, characterised in that the electronic circuits (2-14) of said device form an integral part of a microprocessor.

10. Application of the device according to any one of Claims 1 to 9 to the control of the sequential opening of injectors in phase with the cycles of operation of an internal-combustion engine controlled by an electronic computer, characterised in that the angular position of opening of an injector (21) is loaded in the memory circuit (13) by the electronic computer (P) and the opening of said injector is controlled by said comparator (11).

11. Application according to Claim 10, characterised in that a memory circuit (13) and a comparator (11) are associated with each injector (21).

12. Application according to Claim 10, characterised in that with the injectors (21) there are associated a single memory circuit (13) and a single comparator (11), the triggering signal (Sp) of which is switched to each injector (21) by the electronic computer.

FIG.: 1

FIG.: 1A

FIG.: 2

ROUTINE DE COMMANDE
INJECTEUR

FIG.:3A

METTRE "ON" LE PORT DE
COMMANDE INJECTEUR

INITIALISER LE TEMPS DE
COMMANDE INJECTEUR

RETOUR

ROUTINE TEMPS RÉEL

FIG.: 3B

INCRÉMENTER LE COMPTEUR
TEMPS DE COMMANDE INJECTEUR

Y.A.T.IL DÉBORDEMENT ?    OUI

NON

METTRE "OFF" LE PORT
COMMANDE INJECTEUR

RETOUR

13